# EUROPÄISCHE PATENTSCHRIFT

(11) **EP 0 993 916 B1**
(45) Veröffentlichungstag und Bekanntmachung des Hinweises auf die Patenterteilung: **25.02.2004**
(21) Anmeldenummer: 99810896.3
(22) Anmeldetag: 05.10.1999
(51) Int. Cl.: B25J 9/02, B25J 9/10, B25J 15/02

(54) **Robotergreifer**
Robot gripper
Pince pour robot

(30) Priorität: 15.10.1998 EP 98119468
(43) Veröffentlichungstag der Anmeldung: 19.04.2000
(73) Patentinhaber: Tecan Trading AG, 8708 Männedorf (CH)
(72) Erfinder: Schinzel, Fred, 8708 Männedorf (CH)
(74) Vertreter: OK pat AG

(56) Entgegenhaltungen:
- EP-A- 0 371 872
- DE-A- 3 504 233
- FR-A- 2 676 955
- GB-A- 2 119 894
- US-A- 3 784 031
- US-A- 5 150 937

## Beschreibung

### Technisches Gebiet

Die Erfindung betrifft einen Roboterarm gemäss dem Oberbegriff des Anspruchs 1. Solch ein Roboterarm ist z.B. aus der US-A-3 784 031 bekannt. Derartige Geräte werden beispielsweise zum Aus- und Einladen von Probenbehältern in Laborgeräten oder auch zur Handhabung und Montage von Komponenten an Montagebändern eingesetzt.

### Stand der Technik

Aus DE-A-38 06 148 ist ein Roboterarm bekannt mit einem an einer Steuerstange montierten Greifer. Die Öffnungs- und Schliessbewegungen der Greiferfinger werden durch pneumatische Mittel ausgelöst. Ein Zahnrad, das zwischen mit den Greiferfingern verbundenen Zahnstangen liegt und mit ihnen kämmt, dient lediglich dazu, Gegenläufigkeit der Bewegungen zu erzwingen. Wegen des pneumatischen Antriebs ist die Auflösung und Genauigkeit, mit der bestimmte Positionen angefahren werden können, auf Werte beschränkt, die nicht für alle Anwendungen ausreichen. Die pneumatischen Antriebe erhöhen zudem das Gewicht der Module und erfordern pneumatische Verbindungen, die den Aufbau kompiizieren. Der Greifer ist nicht drehbar.

Aus dem Prospekt 'Automatische Handhabungstechnologie' der Firma AFAG AG in CH-4950 Huttwil ist ein Roboterarm bekannt, der aus zwei Linearmodulen und einem drehbaren Greifermodul zusammengesetzt ist. Auch hier sind die Module pneumatisch angetrieben, was die obengenannten Nachteile mit sich bringt.

Anordnungen von Linear- und Drehmodulen, die weitgehende Freiheit in der Positionierung eines Arbeitsgeräts erlauben, sind auch aus EP-A-0 700 733 und EP-A-0 371 872 bekannt. Allerdings ist das Arbeitsgerät dort jeweils nicht als Greifer ausgebildet, so dass dort die spezifischen Probleme, die ein gattungsgemässer Roboterarm stellt, nicht auftreten.

Aus DE-A-35 04 233 ist ein Greiferarm für Handhabungsgeräte mit einer in einer z-Richtung beweglichen Hubsäule und einem um mindestens eine Achse drehbaren und zumindest eine Greiferzange tragenden Greiferkopf bekannt. Für jede Bewegung des Greiferkopfs und der Greiferzange ist eine eigene Antriebseinheit vorgesehen, die von einem für alle Antriebseinheiten gemeinsamen Elektromotor angetrieben wird. Zur numerischen Steuerung aller Greiferbewegungen weist jede Antriebseinheit eine elektromagnetisch betätigbare Zahnkupplung und eine elektromagnetisch feststellbare Bremse auf, die alternativ betätigt werden. Über Stellwellen werden die einzelnen Rotationsbewegungen von den Antriebseinheiten zum Greiferkopf und den Greiferzangen übertragen. Diese aus dem Stand der Technik bekannte Lösung wird als zu kompliziert und deshalb als zu kostspielig betrachtet.

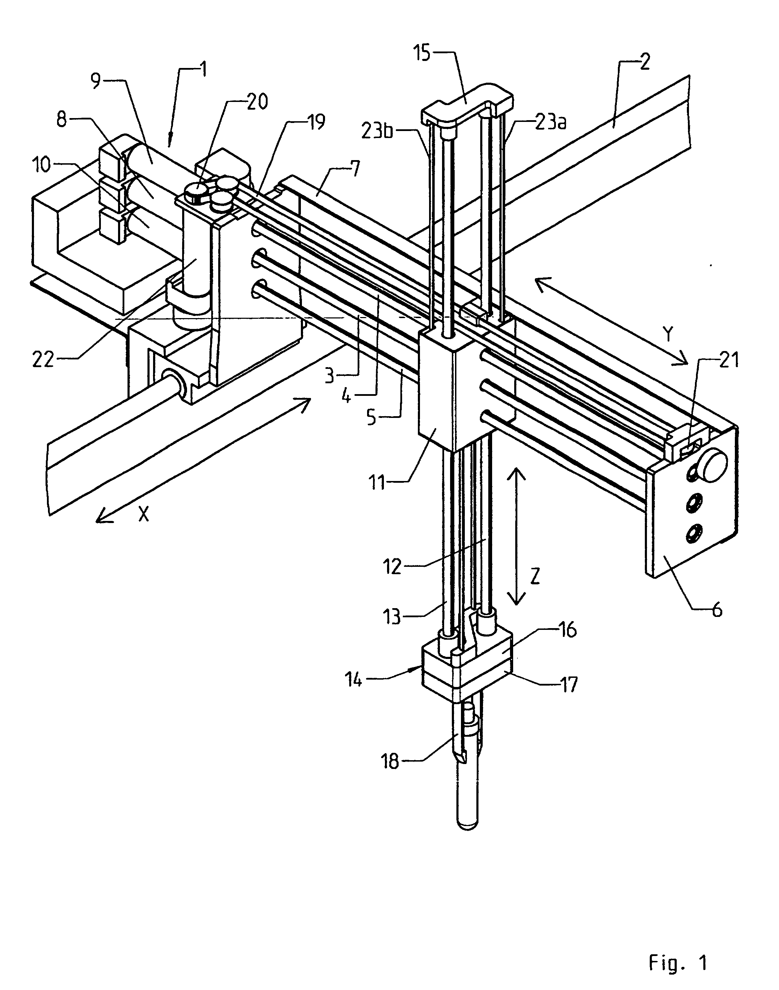

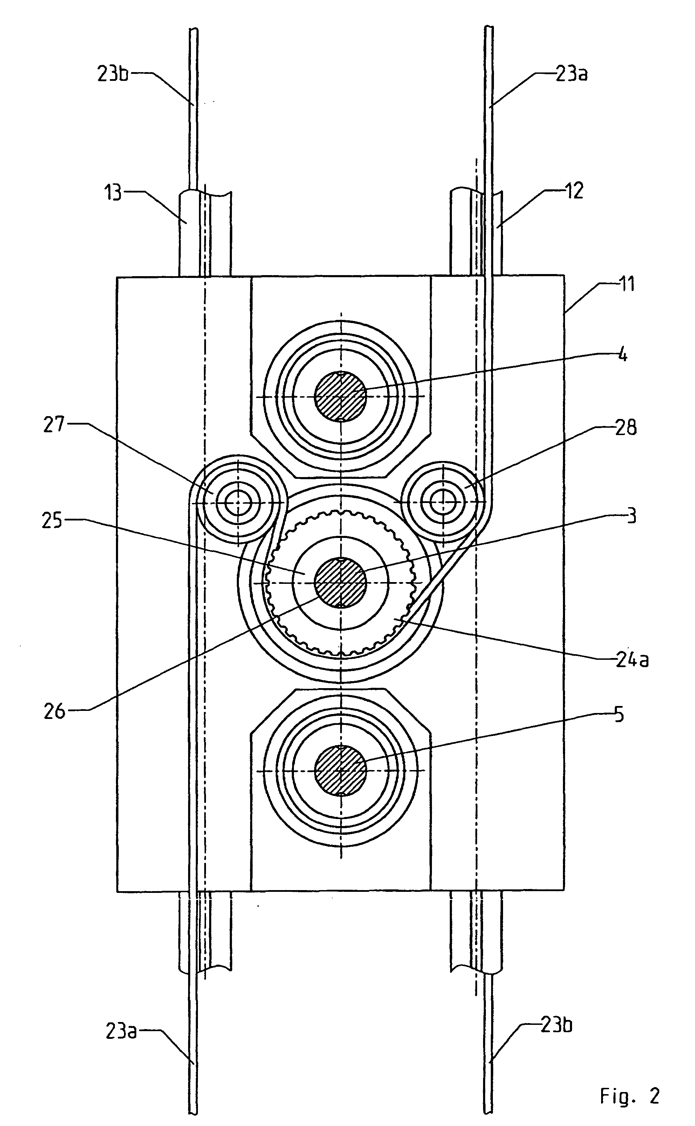

US-A-3,784,031 offenbart einen dreh- und schwenkbaren Manipulator mit einem ausfahrbaren Arm 17, der an seinem einen Ende eine dreh- und kippbare Greiferzange 19 aufweist (vgl. Fig. 1). Die räumlichen Bewegungen der Greiferzange 19 werden über drei Stellwellen 28, 29 und 30 (siehe Fig. 2) bewerkstelligt. Dabei bewirkt die Stellwelle 29 ein Drehen eines die Greiferzange 19 tragenden Zangengehäuses 20 um die Achse dieser Stellwelle 29. Die Stellwelle 30 bewirkt ein Drehen der Greiferzange 19 um eine zur Achse der Stellwelle 29 parallele Achse und die Stellwelle 28 bewirkt ein Drehen der Greiferzange und eines Teils 43 des Greifergehäuses 20 um die Achse der Wellen 43a und 43b, wobei sich diese letztere Drehachse rechtwinklig zur Achse der Stellwelle 29 erstreckt. Zum Ausführen der Greifbewegung der Finger dieser Greiferzange 19 - also zum Öffnen und Schliessen der Greiferzange - verschiebt ein Linearaktuator 52 eine Stange 52a in der Richtung der Achse der Stellwelle 29. Eine spezielle Zuführung für die Energie und die Steuersignale für diesen Linearaktuator 52 wird in US 3,784,031 nicht offenbart; diese Zuführung stellt bei der grossen Beweglichkeit des Manipulators aber ein verwundbares Element dar, wodurch mit häufigen Leitungsunterbrüchen und Ausfällen des ganzen Manipulators gerechnet werden muss.

### Darstellung der Erfindung

Der Erfindung liegt die Aufgabe zu Grunde, einen alternativen, gattungsgemässen Roboterarm zu schaffen, der einen Greifer umfasst, dessen Greifbewegung sehr genau, reproduzierbar und mit hoher Auflösung steuerbar ist und welcher ausserdem eine Drehbewegung ausführen kann, welche den gleichen Anforderungen genügt.

Diese Aufgabe wird durch die Merkmale des Anspruchs 1 gelöst. Der erfindungsgemässe Roboterarm weist einen Greifer auf, welcher neben seiner Greifbewegung auch eine Drehbewegung ausführen kann und bezüglich beider Bewegungen sehr präzise steuerbar ist. Die Bewegungen werden mit mechanischen Mitteln auf den Greifer übertragen und können von Antrieben erzeugt werden, die in einem ortsfesten oder lediglich längs einer Achse verschiebbaren Träger untergebracht sind. Das Gewicht des Greifers kann also niedrig gehalten werden, da er keine eigenen Antriebe zu enthalten braucht. Aus dem gleichen Grund sind auch pneumatische oder elektrische Verbindungen, die sonst oft störend und schwer unterzubringen sind, nicht erforderlich.

Im Folgenden werden die Begriffe "Stellwelle", "Laufstange" und "Stange" als Synonyme betrachtet und jeweils mit den gleichen Bezugszeichen versehen, weil die vorliegende Erfindung unter anderem dadurch gekennzeichnet ist, dass die Hubsäule als zwei in z-Richtung bewegliche, nebeneinander parallel verlaufende und gleichzeitig als Stellwellen dienende, drehbare Stangen bzw. Laufstangen ausgebildet ist.

### Kurze Beschreibung der Zeichnungen

Im folgenden wird die Erfindung anhand von Figuren, welche lediglich Ausführungsbeispiele darstellen, näher erläutert.
Es zeigen
- Fig. 1: einen erfindungsgemässen Roboterarm gemäss einem Ausführungsbeispiel in perspektivischer Darstellung,
- Fig. 2: einen Bestandteil des erfindungsgemässen Roboterarms gemäss Fig. 1 mit abgenommener Abdeckung,
- Fig. 3: einen vertikalen Querschnitt durch den Bestandteil gemäss Fig. 2, längs III-III in Fig. 4,
- Fig. 4: einen vertikalen Längsschnitt gemäss IV-IV in Fig. 3,
- Fig. 5: einen vertikalen Längsschnitt durch einen weiteren Bestandteil des erfindungsgemässen Roboterarms gemäss Fig. 1, längs V-V in Fig. 6,
- Fig. 6: einen Querschnitt durch den Bestandteil gemäss VI-VI in Fig. 5,
- Fig. 7: einen vertikalen Längsschnitt durch eine abgewandelte Ausführungsform des in Fig. 5, 6 dargestellten Bestandteils des erfindungsgemässen Roboterarms entsprechend einem Schnitt längs VII-VII in Fig. 8 und
- Fig. 8: eine Unteransicht des Bestandteils gemäss Fig. 7.

### Wege zur Ausführung der Erfindung

Der Roboterarm umfasst (Fig. 1) als Träger einen Wagen 1, welcher längs einer Schiene 2, die horizontal in einer x-Richtung verläuft, hin- und herverschiebbar ist. Dies kann im einfachsten Fall in an sich bekannter Weise durch einen von einer zentralen Steuereinheit gesteuerten Gleichstrom-Servomotor im Wagen 1 geschehen, der ein Ritzel antreibt, welches direkt oder über einen Zahnriemen mit einer in die Schiene 2 integrierten Zahnstange eingreift.

Der Wagen 1 trägt drei parallel untereinander angeordnete Tragstangen 3, 4, 5, die horizontal in eine y-Richtung ragen, die mit der x-Richtung einen rechten Winkel einschliesst. Ihre Enden sind in einer gemeinsamen Abschlussplatte 6, die über ein Eckprofil 7 am Wagen 1 befestigt ist, gelagert. Die Tragstangen 3, 4, 5 sind im Wagen 1 unverschieblich gelagert, doch sind sie mittels dreier unabhängig voneinander von der zentralen Steuereinheit steuerbarer Gleichstrom-Servomotoren 8, 9, 10 drehbar.

An den Tragstangen 3, 4, 5 ist ein Läufer 11 unverdrehbar und in y-Richtung verschiebbar aufgehängt. In ihm sind zwei längs einer z-Richtung, die mit der x-Richtung und der y-Richtung jeweils einen rechten Winkel einschliesst und folglich vertikal ist, beidseits der Tragstangen 3, 4, 5 durchlaufende Laufstangen 12, 13 verschiebbar und drehbar gelagert. Sie tragen an ihrem unteren Ende einen Greifer 14 und sind am entgegengesetzten oberen Ende in einem gemeinsamen Joch 15 gelagert. Der Greifer 14 weist ein oberes Greifergehäuse 16 auf, das unverschiebbar und unverdrehbar an den Enden der Laufstangen 12, 13 aufgehängt ist und mit welchem ein unteres Zangengehäuse 17, das eine nach unten ragende Greiferzange 18 trägt, drehbar verbunden ist. Die Greiferzange 18 weist zwei Greiferfinger auf, die zum Oeffnen und Schliessen der Greiferzange 18 gegeneinander verschiebbar sind.

Zur Verschiebung des Läufers 11 in y-Richtung ist derselbe an einem Trum eines als Zahnriemen ausgebildeten, oberhalb der Tragstangen 3, 4, 5 parallel zu denselben gespannten geschlossenen Riemens 19 festgemacht, welcher über zwei Umlenkrollen und ein als Zahnrad ausgebildetes Treibrad 20 am Wagen 1 läuft und an einer an der Abschlussplatte 6 gelagerten Umlenkrolle 21 umgelenkt wird. Das Treibrad 20 wird von einem Gleichstrom-Servomotor 22 angetrieben, der von der zentralen Steuereinheit gesteuert wird.

Die Verschiebung der Laufstangen 12, 13 und des Greifers 14 in z-Richtung, d. h. das Heben und Senken des Greifers geschieht mittels eines Verschiebegetriebes, welches Drehbewegungen der ersten Tragstange 3 in entsprechende Verschiebebewegungen umsetzt. Es umfasst zwei wiederum als Zahnriemen ausgebildete Riemen 23a,b, die neben den Laufstangen 12, 13 und parallel zu denselben vom Greifer 14 zum Joch 15 gespannt sind, an welchen ihre entgegengesetzten Enden jeweils befestigt sind. Das Verschiebegetriebe umfasst weiterhin zwei als Zahnräder ausgebildete Verschieberäder 24a,b (Fig. 2-4), die an den entgegengesetzten Enden einer doppelten Hülse 25 angeformt sind, die im Läufer 11 drehbar, aber unverschiebbar und an der mittig angeordneten ersten Tragstange 3 verschiebbar, aber unverdrehbar gelagert ist.

Die Lagerung an der Tragstange 3 ist durch ein Gleitkugellager hergestellt. Die erste Tragstange 3 weist zwei einander diametral gegenüberliegende in Längsrichtung durchgehende Nuten auf, welchen gleichgerichtete, in Längsrichtung begrenzte Nuten an der Innenseite der die erste Tragstange 3 aufnehmenden Durchführungsöffnung 26 der Hülse 25 gegenüberliegen. In den beiden jeweils von einander gegenüberliegenden Nuten gebildeten Kanälen sind jeweils mehrere Kugeln angeordnet, deren Durchmesser nur geringfügig unter dem des Kanals liegt, so dass sie eine formschlüssige Verbindung zwischen der ersten Tragstange 3 und der Hülse 25 herstellen, welche bezüglich gegenseitiger Verdrehung dieser Teile nur sehr geringes Spiel zulässt, so dass sich Drehungen der ersten Tragstange 3 mit grosser Präzision auf die Hülse 25 und damit die Verschieberäder 24a,b übertragen, aber einer Verschiebung der Hülse 25 längs der Tragstange 3 nur sehr wenig Widerstand entgegensetzt.

Der Riemen 23a ist (Fig. 2) oben über eine links oberhalb des Verschieberades 24a angeordnete erste Umlenkrolle 27 geführt, dann unten um das Verschieberad 24a, mit dem er eingreift und anschliessend unten um eine rechts oberhalb des Verschieberads 24a angeordnete zweite Umlenkrolle 28, welche den seitlichen Abstand des Riemens 23a von den Tragstangen 3, 4, 5 einstellt. Aufgrund dieser Führung des Riemens 23a greift derselbe über einen Winkel von annähernd 180° mit dem Verschieberad 24a ein, was einen schlupffreien Kontakt ohne lokale Ueberlastung des Riemens 23a sicherstellt. Die Führung des Riemens 23b über das Verschieberad 24b ist genau analog.

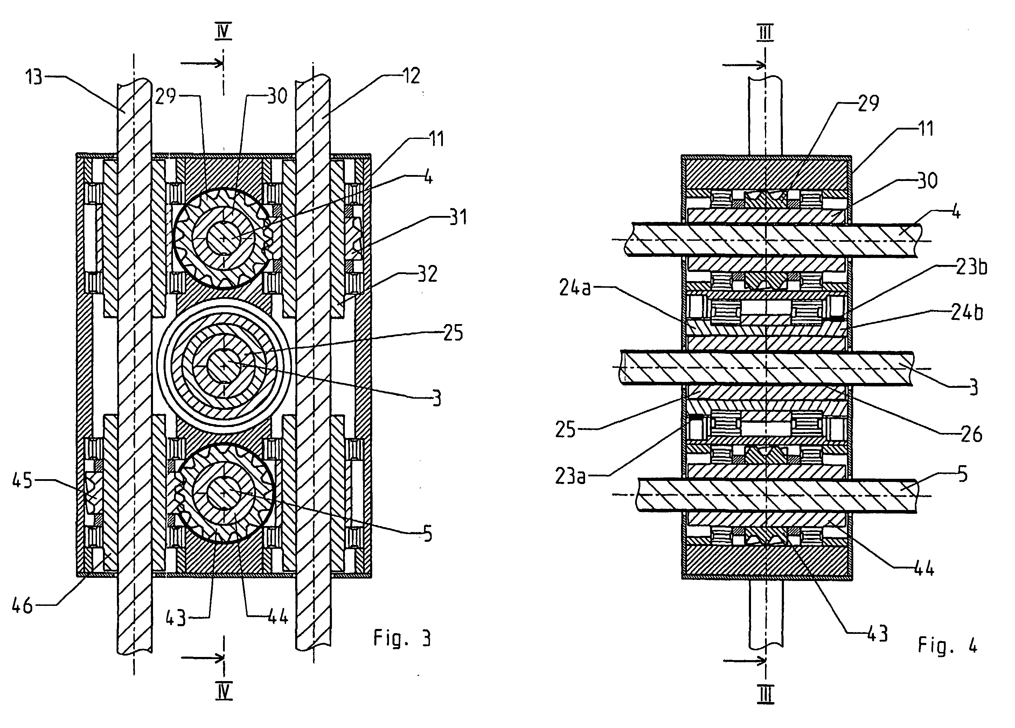

Das Oeffnen und Schliessen der Greiferzange 18 erfolgt über ein erstes Winkelgetriebe im Läufer 11 und ein mechanisches Greifergetriebe im Greifer 14. Das erste Winkelgetriebe setzt Drehungen der zweiten Tragstange 4 in entsprechende Drehungen der ersten Laufstange 12 um. Es umfasst (Fig. 3, 4) ein erstes Schraubenrad 29, das über eine Hülse 30, auf die es mittig aufgesetzt ist, an der dritten Tragstange 4 gelagert ist und ein zweites Schraubenrad 31, das in gleicher Weise über eine Hülse 32 an der ersten Laufstange 12 gelagert ist. Die Schraubenräder 29, 31 stehen miteinander im Eingriff. Die Hülsen 30, 32 sind an der zweiten Tragstange 4 bzw. an der ersten Laufstange 12 in genau gleicher Weise gelagert wie die Hülse 25 an der ersten Tragstange 3.

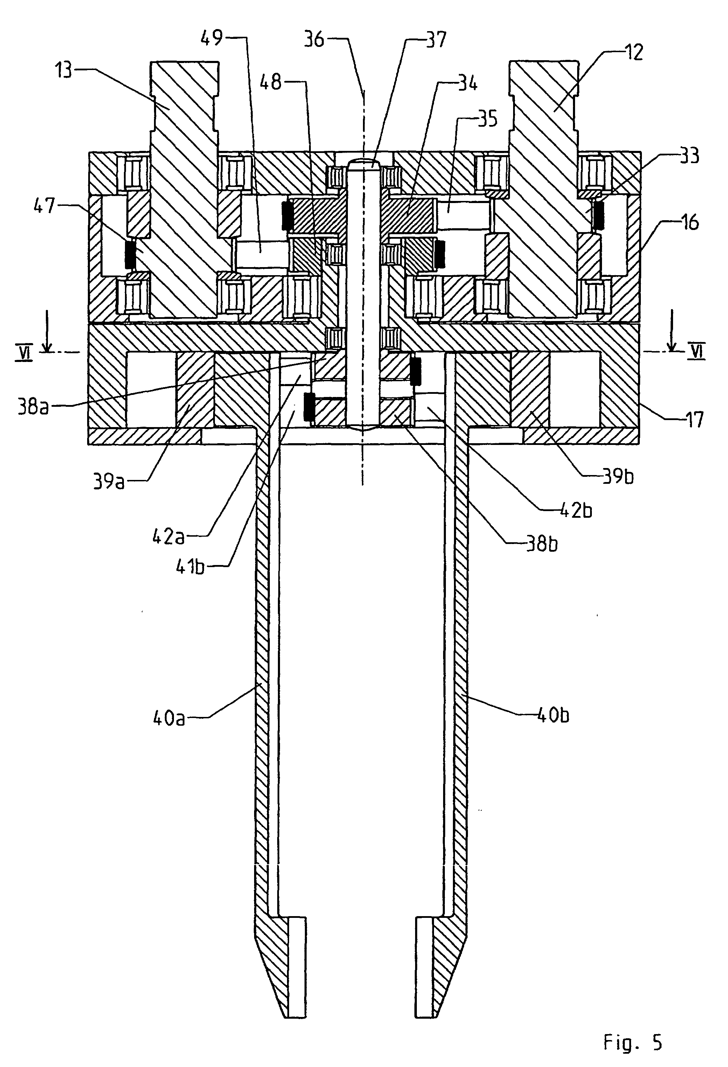

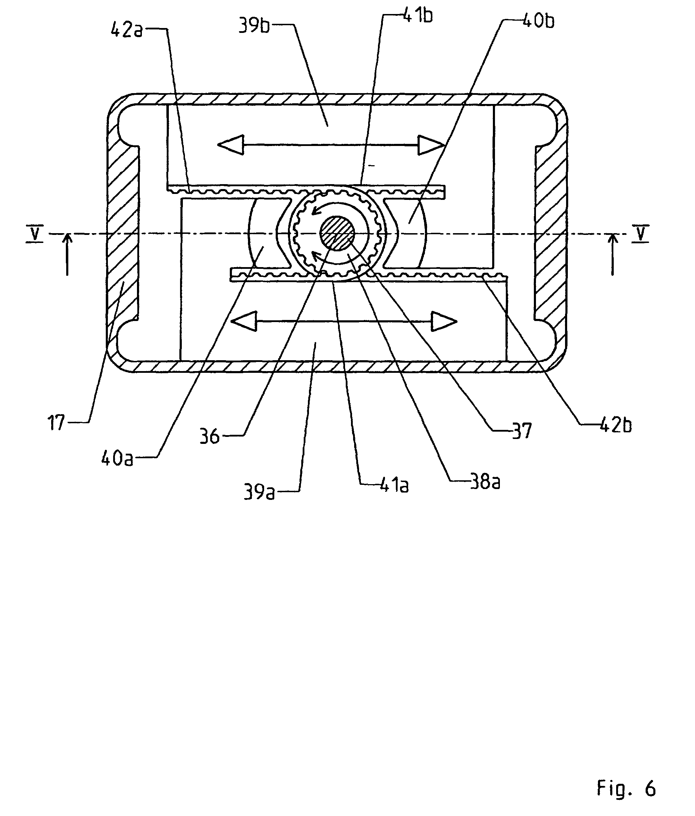

Das Greifergetriebe setzt Drehungen der ersten Laufstange 12 in entsprechende Oeffnungs- und Schliessbewegungen der Greiferzange 18 um. Es umfasst (Fig. 5, 6) ein in der Nähe des unteren Endes der ersten Laufstange 12 angeformtes, als Zahnrad ausgebildetes Greiferrad 33 und ein Greiferritzel 34, über die ein geschlossener Zahnriemen 35 läuft. Das Greiferritzel 34 sitzt nahe dessen oberem Ende unverdrehbar auf einem Greiferbolzen 37, der um eine in z-Richtung verlaufende Drehachse 36 drehbar im Greifergehäuse 16 gelagert ist und aus demselben, in welchem die bisher genannten Teile des Greifergetriebes angeordnet sind, in das unten anschliessende Zangengehäuse 17 ragt, wo er an seinem unteren Ende ein erstes Zahnrad 38a und ein zweites Zahnrad 38b trägt. Die Zahnräder 38a,b sind gleich ausgebildet - insbesondere weisen sie gleichen Durchmesser auf - und koaxial und unverdrehbar am Greiferbolzen 37 befestigt, so dass an ihrer Stelle auch ein einziges breiteres Zahnrad eingesetzt werden kann.

Im Zangengehäuse 17 sind ein erster Schieber 39a und ein zweiter Schieber 39b, welche die Greiferfinger 40a,b tragen, parallel zueinander quer zur z-Richtung verschiebbar gelagert. Sie weisen den zwischen ihnen liegenden Zahnrädern 38a,b parallele gerade Flanken 41a,b zu. Ein erster Zahnriemen 42a ist an einem dem Greiferfinger 40a zunächst liegenden Vorderende von dessen Flanke 41a am ersten Schieber 39a befestigt und liegt bis zum ersten Zahnrad 38a an derselben an. Dort wird er umgelenkt, wobei er über einen Winkel von 180° mit dem ersten Zahnrad 38a eingreift und läuft dann an derselben anliegend zum Hinterende der Flanke 41b des zweiten Schiebers 39b, wo er an demselben befestigt ist.

In ganz entsprechender Weise läuft ein zweiter Zahnriemen 42b vom Hinterende der Flanke 41a des ersten Schiebers 39a, wo er befestigt ist, an derselben anliegend bis zum zweiten Zahnrad 38b, wo er ebenfalls, allerdings mit umgekehrtem Drehsinn bezüglich der Drehachse 36, um 180° umgelenkt wird und weiter an der Flanke 41b des zweiten Schiebers 39b bis zu deren dem Greiferfinger 40b zunächst liegenden Vorderende läuft, wo er wiederum befestigt ist. Der Abstand zwischen den beiden Flanken 41a, 41b entspricht gerade dem Durchmesser der Zahnräder 38a,b und der doppelten Dicke der Zahnriemen 42a,b. Die Anordnung ist, abgesehen von der Höhenversetzung der Zahnräder 38a, 38b und der Zahnriemen 42a, 42b bezüglich der Drehachse 36 spiegelsymmetrisch.

Eine Verdrehung des Zangengehäuses 17 relativ zum Greifergehäuse 16 erfolgt über ein zweites Winkelgetriebe im Läufer 11 und ein mechanisches Drehgetriebe im Greifer 14. Das zweite Winkelgetriebe, das Drehbewegungen der dritten Tragstange 5 in entsprechende Drehbewegungen der zweiten Laufstange 13 umsetzt, ist (Fig. 3, 4) mit einem ersten Schraubenrad 43, das auf einer an der dritten Tragstange 5 gelagerten Hülse 44 sitzt und einem mit demselben eingreifenden zweiten Schraubenrad 45 auf einer an der zweiten Laufstange 13 gelagerten Hülse 46 genau gleich aufgebaut wie das erste Winkelgetriebe.

Das Drehgetriebe setzt Drehbewegungen der zweiten Laufstange 13 in solche des Zangengehäuses 17 um, das um die gleiche Drehachse 36 wie der Greiferbolzen 37 drehbar am Greifergehäuse 16 gelagert ist. Es umfasst (Fig. 5) ein in der Nähe des unteren Endes der zweiten Laufstange 13 angeformtes, als Zahnrad ausgebildetes Drehrad 47 und ein Drehritzel 48, über die ein geschlossener Zahnriemen 49 läuft. Das Drehritzel 48 bildet einen unverdrehbar mit dem Zangengehäuse 17 verbundenenen Zahnkranz und ist koaxial mit dem Greiferbolzen 37, der durch eine zentrale Oeffnung in demselben hindurch das Greiferritzel 34 mit den Zahnrädern 38a,b verbindet. Das Drehrad 47 und das Drehritzel 48 weisen jeweils gleichen Durchmesser auf wie das Greiferrad 33 bzw. das Greiferritzel 34.

Soll nun ein bestimmter, durch Werte X, Y, Z für die x-, y-und z-Koordinaten gekennzeichneter Punkt von der Greiferzange 18 angefahren werden, so wird (Fig. 1) der Wagen 1 durch den entsprechenden Gleichstrom-Servomotor in an sich bekannter Weise längs der Schiene 2 verfahren, bis die x-Koordinate mit dem Sollwert X übereinstimmt. Die y-Koordinate wird mit dem Sollwert Y in Uebereinstimmung gebracht, indem durch den Gleichstrom-Servomotor 22 das Treibrad 20 angetrieben und dadurch der Riemen 19 bewegt wird, der den Läufer 11 mitnimmt und längs der Tragstangen 3, 4, 5 verschiebt. Die Einstellung der z-Koordinate auf den Sollwert Z erfolgt schliesslich mittels des Gleichstrom-Servomotors 8, der die erste Tragstange 3 dreht, welche dabei (Fig. 2) die Verschieberäder 24a,b im Läufer 11 mitnimmt. Dadurch werden die über die Verschieberäder geführten Riemen 23a,b in z-Richtung verschoben und nehmen den Greifer 14, die Laufstangen 12, 13 und das Joch 15 mit.

Auch das Oeffnen und Schliessen der Greiferzange 18 wird vom Wagen 1 aus bewerkstelligt. Wird etwa (Fig. 3) die zweite Tragstange 4 vom Gleichstrom-Servomotor 9 im - von der Abschlussplatte 6 her gesehen - Gegenuhrzeigersinn gedreht, so wird dies vom ersten Winkelgetriebe im Läufer 11 in eine proportionale Drehung der ersten Laufstange 12 im - vom Joch 15 her gesehen - Uhrzeigersinn umgesetzt. Diese Drehung teilt sich im Greifergetriebe (Fig. 5) über das Greiferrad 33, den Riemen 35 und das Greiferritzel 34 dem Greiferbolzen 37 mit, der sie auf die Zahnräder 38a,b überträgt. Die Drehung der Zahnräder 38a und 38b im Uhrzeigersinn wird (Fig. 6) über den ersten Zahnriemen 42a in eine Bewegung des zweiten Schiebers 39b nach rechts bzw. über den zweiten Zahnriemen 42b in eine Bewegung des ersten Schiebers 39a nach links umgesetzt, so dass sich die Greiferfinger 40a und 40b auseinanderbewegen und die Greiferzange 18 sich öffnet. In entsprechender Weise führt eine entgegengesetzte Drehung der zweiten Tragstange 4 durch den Gleichstrom-Servomotor 9 zu einer Schliessbewegung der Greiferzange 18. Die Verschiebung der Greiferfinger 40a,b ist stets dem Drehwinkel der zweiten Tragstange 4 proportional.

In ähnlicher Weise werden Drehungen der Greiferzange 18 vom Wagen 1 aus bewirkt, indem die dritte Tragstange 5 durch den Gleichstrom-Servomotor 10 gedreht wird. Eine Drehung im Uhrzeigersinn wird (Fig. 3) durch das zweite Winkelgetriebe im Läufer 11 in eine Drehung im Uhrzeigersinn der zweiten Laufstange 13 von proportionalem Drehwinkel umgesetzt. Das Drehgetriebe (Fig. 5) setzt diese Drehung über das Drehrad 47, den Zahnriemen 49 und das Drehritzel 48 in eine proportionale Drehung des Zangengehäuses 17 um. Die Drehung der zweiten Laufstange 13 wird dabei leicht untersetzt, da der Durchmesser des Drehritzels 48 etwas grösser ist als derjenige des Drehrades 47. Damit die Drehung des Zangengehäuses 17 keine Verschiebung der Greiferfinger 40a,b in demselben bewirkt, muss der Greiferbolzen 37 mitgedreht werden. Dies geschieht durch eine genau entsprechende Ausgleichsdrehung der ersten Laufstange 12, die in genau entsprechender Weise untersetzt wird. Da das erste Winkelgetriebe und das zweite Winkelgetriebe einander genau entsprechen und auch das gleiche Uebersetzungsverhältnis, z. B. 1:1 aufweisen, wird die Ausgleichsdrehung des Greiferbolzens 37 durch eine der Drehung der zweiten Tragstange 4 im Drehwinkel genau entsprechende und im Drehsinn entgegengesetzte Ausgleichsdrehung der dritten Tragstange 5 bewirkt.

Die beschriebenen Bewegungen, nämlich die Verschiebung des Wagens 1 in x-, des Läufers 11 in y- und des Greifers 14 in z-Richtung sowie das Oeffnen und Schliessen sowie Drehen der Greiferzange 18 können nacheinander oder bei geeigneter zentraler Steuereinheit auch gleichzeitig ausgeführt werden.

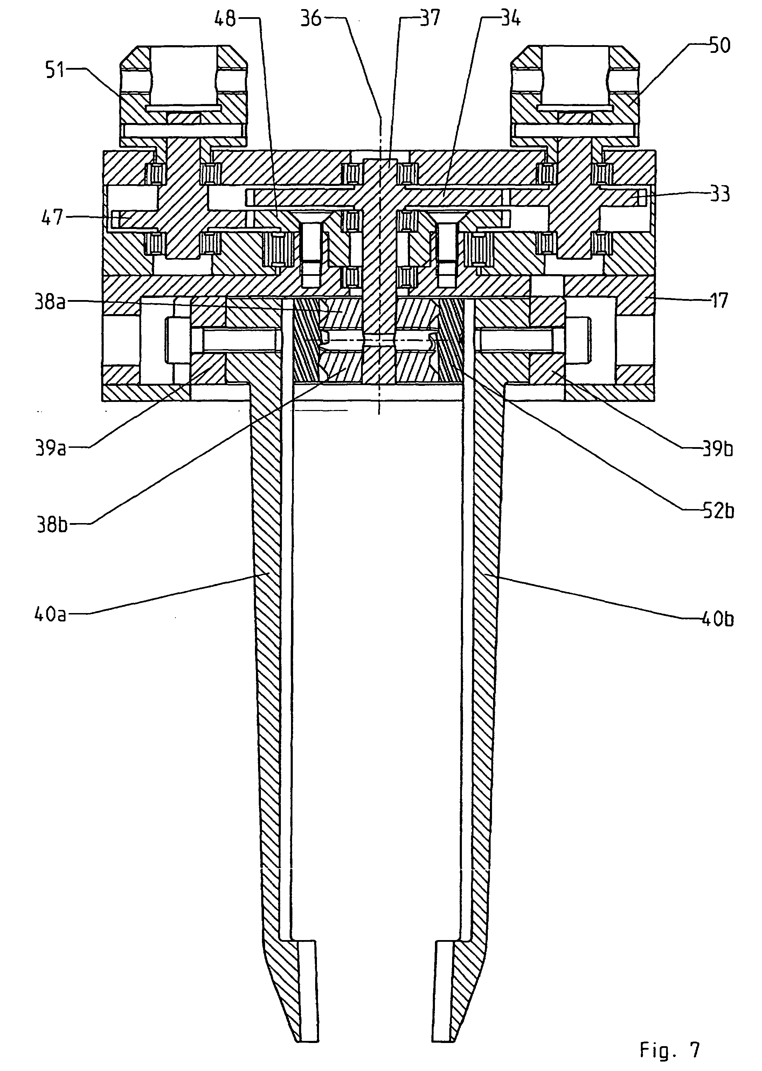

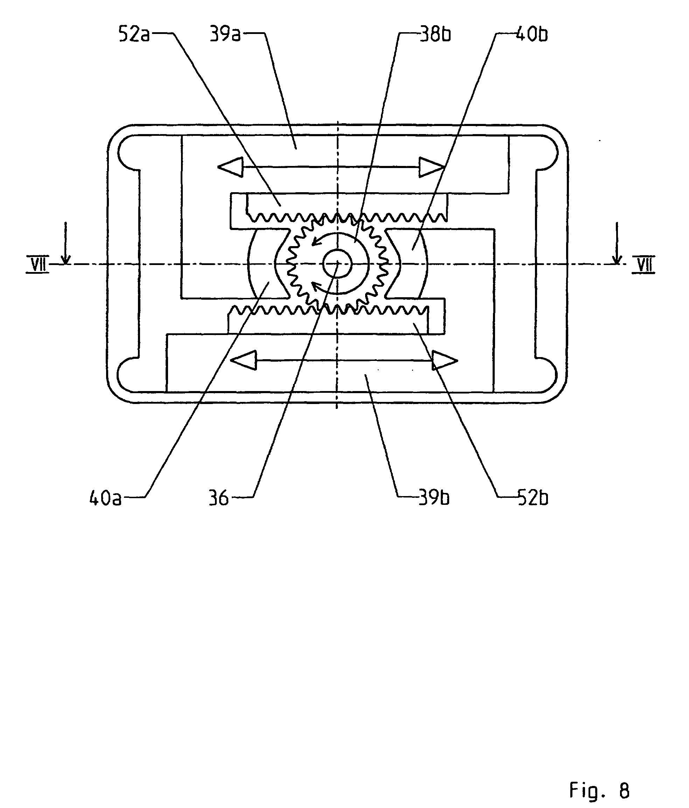

Gemäss einer abgewandelten Ausführung (Fig. 7, 8) des Greifers 14, welche jedoch in ihrem grundsätzlichen Aufbau der oben im Zusammenhang mit Fig. 5, 6 beschriebenen entspricht, werden die Laufstangen 12, 13 (nicht dargestellt) von Hülsen 50; 51 aufgenommen, welche im Greifergehäuse 16 drehbar gelagert sind und das Greiferrad 33 bzw. das Drehrad 47 tragen. Das Greiferrad 33 greift hier direkt mit dem Greiferritzel 34 ein, desgleichen das Drehrad 47 mit dem Drehritzel 48. In ähnlicher Weise tragen die Schieber 39a,b Zahnstangen 52a;b, mit denen die Zahnräder 38a,b direkt eingreifen. Durch die direkten, ohne Riemen hergestellten Wirkverbindungen ist die Genauigkeit der Steuerung besser und die dynamischen Eigenschaften des Greifers sind einfacher.

Auch in der Ausbildung einzelner Teile sind diverse Abwandlungen möglich, ohne dass der Rahmen der Erfindung verlassen würde. Beispielsweise können statt der Gleichstrom-Servomotoren auch andere steuer- oder regelbare Elektromotoren eingesetzt werden, insbesondere Schrittmotoren. Die Trag- und Laufstangen können anders ausgebildet sein als beschrieben, z. B. eine andere Zahl von Nuten aufweisen. Entscheidend ist, dass sie zur Uebertragung von Drehmomenten geeignet sind. Auch bei den Winkelgetrieben sind natürlich andere Ausführungen denkbar, etwa Schneckengetriebe.

### Bezugszeichenliste

- 1: Wagen
- 2: Schiene
- 3, 4, 5: Tragstangen
- 6: Abschlussplatte
- 7: Eckprofil
- 8, 9, 10: Gleichstrom-Servomotoren
- 11: Läufer
- 12, 13: Laufstangen
- 14: Greifer
- 15: Joch
- 16: Greifergehäuse
- 17: Zangengehäuse
- 18: Greiferzange
- 19: Riemen
- 20: Treibrad
- 21: Umlenkrolle
- 22: Gleichstrom-Servomotor
- 23a, 23b: Riemen
- 24a, 24b: Verschieberäder
- 25: Hülse
- 26: Durchführungsöffnung
- 27, 28: Umlenkrollen
- 29: Schraubenrad
- 30: Hülse
- 31: Schraubenrad
- 32: Hülse
- 33: Greiferrad
- 34: Greiferritzel
- 35: Zahnriemen
- 36: Drehachse
- 37: Greiferbolzen
- 38a, 38b: Zahnräder
- 39a, 39b: Schieber
- 40a, 40b: Greiferfinger
- 41a, 41b: Flanken
- 42a, 42b: Zahnriemen
- 43: Schraubenrad
- 44: Hülse
- 45: Schraubenrad
- 46: Hülse
- 47: Drehrad
- 48: Drehritzel
- 49: Zahnriemen
- 50, 51: Hülsen
- 52a, 52b: Zahnstangen

## Patentansprüche

1. Roboterarm mit einem eine Greiferzange (18) umfassenden Greifer (14), welcher ein Greifergehäuse (16) und ein gegenüber diesem um eine Drehachse (36) drehbar gelagertes Zangengehäuse (17) umfasst, in welchem Zangengehäuse mindestens ein Greiferfinger (40a,40b) beweglich gelagert ist, wobei der Robotarm eine in einer vertikalen z-Richtung bewegliche Hubsäule umfasst, an welcher das Greifergehäuse (16) des Greifers (14) unverdrehbar aufgehängt ist und wobei das Zangengehäuse (17) mit einer zweiten Stellwelle (13) derart in Wirkverbindung steht, dass Drehungen derselben in entsprechende Drehungen des Zangengehäuses (17) umgesetzt werden, **dadurch gekennzeichnet, dass** der mindestens eine Greiferfinger (40a, 40b) über einen zur Drehachse (36) koaxialen Greiferbolzen (37) mit einer ersten Stellwelle (12) derart in Wirkverbindung steht, dass Drehungen derselben in Greifbewegungen des mindestens einen Greiferfingers (40a,40b) umgesetzt werden, wobei die Hubsäule als zwei in z-Richtung bewegliche, nebeneinander parallel verlaufende und gleichzeitig als Stellwellen (12,13) dienende, drehbare Stangen (12,13) ausgebildet ist.

2. Roboterarm nach Anspruch 1, **dadurch gekennzeichnet, dass** die Greiferzange (18) zwei Greiferfinger (40a,40b) umfasst, welche an zwei verschiebbar im Zangengehäuse (17) gelagerten Schiebern (39a; 9b) befestigt sind, welche mit dem Greiferbolzen (37) derart in Wirkverbindung stehen, dass Drehungen desselben in entsprechende gegeneinander gerichtete Verschiebungen der Schieber (39a,39b) umgesetzt werden.

3. Roboterarm nach Anspruch 2, **dadurch gekennzeichnet, dass** der Greiferbolzen (37) mindestens ein zwischen den Schiebern (39a,39b) angeordnetes Zahnrad (38a,38b) trägt.

4. Roboterarm nach Anspruch 3, **dadurch gekennzeichnet, dass** über das mindestens eine Zahnrad (38a,38b) ein von einem Vorderende des ersten Schiebers (39a) ausgehender erster Zahnriemen (42a) zu einem Hinterende des zweiten Schiebers (39b) läuft und in bezüglich der Drehachse (36) umgekehrtem Drehsinn ein von einem Vorderende des zweiten Schiebers (39b) ausgehender zweiter Zahnriemen (42b) zu einem Hinterende des ersten Schiebers (39a).

5. Roboterarm nach Anspruch 4, **dadurch gekennzeichnet, dass** der erste Schieber (39a) an einer dem mindestens einen Zahnrad (38a,38b) zugewandten Seite eine gerade Flanke (41a) aufweist, an welcher der erste Zahnriemen (42a) zwischen dem Vorderende des ersten Schiebers (39a) und dem mindestens einen Zahnrad (38a) und der zweite Zahnriemen (42b) zwischen dem Hinterende des ersten Schiebers (39a) und dem mindestens einen Zahnrad (38b) anliegen und der zweite Schieber (39b) eine zur Flanke (41a) des ersten Schiebers (39a) parallele, ebenfalls dem mindestens einen Zahnrad (38a,38b) zugewandte gerade Flanke (41b) aufweist, an welcher der zweite Zahnriemen (42b) zwischen dem Vorderende des zweiten Schiebers (39b) und dem mindestens einen Zahnrad (38b) und der erste Zahnriemen (42a) zwischen dem Hinterende des zweiten Schiebers (39b) und dem mindestens einen Zahnrad (38a) anliegen.

6. Roboterarm nach Anspruch 3, **dadurch gekennzeichnet, dass** die Schieber (39a,39b) jeweils mit Verzahnungen versehen sind, mit denen das mindestens eine Zahnrad (38a;38b) eingreift.

7. Roboterarm nach einem der Ansprüche 1 bis 6, **dadurch gekennzeichnet, dass** die Wirkverbindung des Zangengehäuses (17) mit der ersten Stange (12) über einen unverdrehbar mit dem ersteren verbundenen, zur Drehachse (36) koaxialen Zahnkranz hergestellt ist.

8. Roboterarm nach einem der Ansprüche 1 bis 7, **dadurch gekennzeichnet, dass** die Stangen (12,13) längsverschieblich in einem Läufer (11) gelagerte Laufstangen (12,13) sind und der Greifer (14) unverschieblich an denselben aufgehängt ist.

9. Roboterarm nach Anspruch 8, **dadurch gekennzeichnet, dass** der Läufer (11) zur Verschiebung des Greifers (14) in z-Richtung ein Verschiebegetriebe umfasst mit mindestens einem antreibbaren Verschieberad (24a,24b), über welches mindestens ein Riemen (23a;23b) vom Greifer (14) zu den vom Greifer (14) abgewandten Enden der Laufstangen (12,13), wo er befestigt ist, läuft.

10. Roboterarm nach Anspruch 9, **dadurch gekennzeichnet, dass** der Läufer (11) an mindestens drei sich quer zur z-Richtung in einer y-Richtung erstreckenden parallelen Tragstangen (3,4,5), die in einem Träger drehbar gelagert sind, verschiebbar aufgehängt ist und das mindestens eine Verschieberad (24a,24b) an einer ersten Tragstange (3) verschiebbar und unverdrehbar gelagert ist und der Läufer (11) ein erstes Winkelgetriebe, welches Drehungen einer zweiten Tragstange (4) in Drehungen der ersten Laufstange (12) umsetzt, enthält sowie ein zweites Winkelgetriebe, welches Drehungen einer dritten Tragstange (5) in Drehungen der zweiten Laufstange (13) umsetzt.

11. Roboterarm nach Anspruch 10, **dadurch gekennzeichnet, dass** jedes Winkelgetriebe ein an der entsprechenden Tragstange (4;5) unverdrehbar gelagertes erstes Schraubenrad (29;43) umfasst und ein unverdrehbar an der entsprechenden Laufstange (12;13) gelagertes zweites Schraubenrad (31;45), das mit dem ersten Schraubenrad (29;43) eingreift.

12. Roboterarm nach Anspruch 10 oder 11, **dadurch gekennzeichnet, dass** der Läufer (11) mittels eines mit ihm verbundenen in y-Richtung doppelt geführten und am Träger antreibbaren Riemens (19), welcher an den vom Träger abgewandten Enden der Tragstangen (3,4,5) umgelenkt ist, längs der Tragstangen (3,4,5) verschiebbar ist.

13. Roboterarm nach einem der Ansprüche 10 bis 12, **dadurch gekennzeichnet, dass** der Träger als Wagen (1) ausgebildet ist, der längs einer sich in einer x-Richtung quer zur y-Richtung und quer zur z-Richtung erstreckenden raumfesten Schiene (2) verfahrbar ist.

## Claims

1. Robot arm with a gripper clamp (18) contained in a gripper unit (14) which includes a gripper housing (16) and, mounted opposite this and free to rotate around an axle (36), a clamp housing (17) in which at least one gripper finger (40a, 40b) is supported free to move, the robot arm including a lifting column movable in a vertical direction along a z-axis, the gripper housing (16) of the gripper unit (14) being mounted on this column without freedom to rotate, and the clamp housing (17) being mechanically connected to a second positioning rod (13) in such a way that rotations of the latter are converted into corresponding rotations of the clamp housing (17), **characterized in that** the minimum of one gripper finger (40a, 40b) is mechanically connected to a first positioning rod (12) by means of a gripper pin (37) coaxial with the axle (36) in such a way that rotations of the rod (12) are converted into gripping actions of at least one gripper finger (40a, 40b), the lifting column being in the form of two rotatable rods (12, 13) movable along the z axis, running parallel to each other and serving simultaneously as positioning rods (12, 13).

2. Robot arm according to Claim 1, **characterized in that** the gripper clamp (18) includes two gripper fingers (40a, 40b) fastened to two pusher elements (39a, 39b) mounted free to slide in the clamp housing (17), and mechanically connected to the gripper pin (37) in such a way that rotations of the latter are converted into corresponding sliding motions in contrary directions of the pusher elements (39a, 39b).

3. Robot arm according to Claim 2, **characterized in that** the gripper pin (37) carries at least one toothed wheel (38a, 38b) located between the pusher elements (39a, 39b).

4. Robot arm according to Claim 3, **characterized in that** over the minimum of one toothed wheel (38a, 38b), a first toothed belt (42a) starting from a front end of the first pusher element (39a) runs to a rear end of the second pusher element (39b) and in a direction contrary to the direction of rotation of the axle (36) a second toothed belt (42b) starting from a front end of the second pusher element (39b) runs to a rear end of the first pusher element (39a).

5. Robot arm according to Claim 4, **characterized in that** the first pusher element (39a) displays on a side turned towards the minimum of one toothed wheel (38a, 38b) a straight edge (41a) against which lie the first toothed belt (42a) between the front end of the first pusher element (39a) and the minimum of one toothed wheel (38a) and the second toothed belt (42b) between the rear end of the first pusher element (39a) and the minimum of one toothed wheel (38b), and the second pusher element (39b) displays a straight edge (41b) parallel to the straight edge (41a) of the first pusher element (39a), similarly facing the minimum of one toothed wheel (38a, 38b) and against which lie the second toothed belt (42b) between the front end of the second pusher element (39b) and the minimum of one toothed wheel (38b) and the first toothed belt (42a) between the rear end of the second pusher element (39b) and the minimum of one toothed wheel (38a).

6. Robot arm according to Claim 3, **characterized in that** each of the pusher elements (39a, 39b) is provided with toothing with which the minimum of one toothed wheel (38a, 38b) engages.

7. Robot arm according to one of Claims 1 to 6, **characterized in that** the mechanical connection between the clamp housing (17) and the first rod (12) is constructed from a toothed collar immovably fixed to the former and coaxial with the axle (36).

8. Robot arm according to one of Claims 1 to 7, **characterized in that** the rods (12, 13) are mounted as longitudinally sliding rods (12, 13) supported in a traveller (11) and the gripper unit (14) is fixed to these without freedom to slide.

9. Robot arm according to Claim 8, **characterized in that** the traveller (11) for translation of the gripper unit (14) along the z axis includes a translation drive with at least one drivable translation wheel (24a, 24b), over which at least one belt (23a, 23b) runs from the gripper unit (14) to the end of the positioning rods (12, 13) most distant from the gripper unit (14), to which it is fixed.

10. Robot arm according to Claim 9, **characterized in that** the traveller (11) is mounted free to slide on at least three parallel supporting rods (3, 4, 5) mounted free to rotate in a support and running at right angles to the z axis along the y axis and that at least one translation wheel (24a, 24b) is mounted free to slide but not to rotate on a first supporting rod (3) and the traveller (11) contains a first angle drive which converts rotations of a second supporting rod (4) into rotations of the first slide rod (12) and similarly contains a second angle drive which converts rotations of a third supporting rod (5) into rotations of the second slide rod (13).

11. Robot arm according to Claim 10, **characterized in that** each angle drive includes a helical gear (29, 43) fixed without freedom to rotate on to the corresponding supporting rod (4, 5) and a second helical gear (31, 45) fixed without freedom to rotate on to the corresponding slide rod (12, 13) which engages with the first helical gear (29, 43).

12. Robot arm according to Claim 10 or 11, **characterized in that** the traveller (11) can be translated longitudinally along the supporting rods (3, 4, 5) by means of a belt (19) which passes over it twice along the y axis and can be driven via the support, and which is brought round at the end of the supporting rods (3, 4, 5) furthest from the support.

13. Robot arm according to one of Claims 10 to 12, **characterized in that** the support is constructed in the form of a trolley (1) which can be displaced along a fixed rail (2) on an x axis at right angles to the y axis and at right angles to the z axis.

## Revendications

1. Bras de robot muni d'un organe de préhension (14) comportant une pince de préhension (18), ledit organe de préhension (14) comprenant un boîtier de préhension (16) et un boîtier de pince (17) placé, par rapport à celui-ci, de façon pivotante autour d'un axe de rotation (36), au moins un doigt préhenseur (40a, 40b) étant placé de façon mobile dans ledit boîtier, le bras de robot comprenant une colonne élévatrice pouvant bouger dans une direction verticale z, à laquelle est accroché, sans liberté de rotation, le boîtier de préhension (16) de l'organe de préhension (14), et le boîtier de pince (17) étant relié par action coordonnée à une deuxième tige de réglage (13) de sorte que des rotations de celle-ci sont transformées en rotations correspondantes du boîtier de pince (17), **caractérisé en ce que** au moins ledit un doigt préhenseur (40a, 40b) est relié par action coordonnée à une première tige de réglage (12) au moyen d'un boulon de préhension (37) placé dans le même axe que l'axe de rotation (36), de sorte que des rotations de ladite tige sont transformées en mouvements de préhension d'au moins ledit un doigt préhenseur (40a, 40b), la colonne élévatrice étant conçue comme deux tiges rotatives (12, 13), pouvant bouger dans la direction z, placées parallèlement l'une à l'autre et servant en même temps de tiges de réglage (12, 13).

2. Bras de robot selon la revendication 1, **caractérisé en ce que** la pince de préhension (18) comprend deux doigts préhenseurs (40a, 40b) fixés à deux coulisseaux (39a ; 39b) placés dans le boîtier de pince (17) de façon coulissante, et reliés par action coordonnée au boulon de préhension (37) de sorte que des rotations de ce dernier sont transformés en déplacements correspondants, orientés dans un sens opposé, des coulisseaux (39a, 39b).

3. Bras de robot selon la revendication 2, **caractérisé en ce que** le boulon de préhension (37) supporte au moins une roue dentée (38a, 38b) placée entre les coulisseaux (39a, 39b).

4. Bras de robot selon la revendication 3, **caractérisé en ce que**, par le biais d'au moins ladite une roue dentée (38a, 38b), une première courroie dentée (42a) partant d'une extrémité avant du premier coulisseau (39a) va vers une extrémité arrière du deuxième coulisseau (39b) et, dans la direction de rotation inverse par rapport à l'axe de rotation (36), une deuxième courroie dentée (42b) partant d'une extrémité avant du deuxième coulisseau (39b) va vers une extrémité arrière du premier coulisseau (39a).

5. Bras de robot selon la revendication 4, **caractérisé en ce que** le premier coulisseau (39a) comporte, sur une face tournée vers au moins ladite une roue dentée (38a, 38b), un flanc droit (41a) contre lequel s'appuient la première courroie dentée (42a), entre l'extrémité avant du premier coulisseau (39a) et au moins ladite une roue dentée (38a), ainsi que la deuxième courroie dentée (42b), entre l'extrémité arrière du premier coulisseau (39a) et au moins ladite une roue dentée (38b), et **en ce que** le deuxième coulisseau (39b) comporte un flanc droit (41b), parallèle au flanc (41a) du premier coulisseau (39a) et également tourné vers au moins ladite une roue dentée (38a, 38b), contre lequel s'appuient la deuxième courroie dentée (42b), entre l'extrémité avant du deuxième coulisseau (39b) et au moins ladite une roue dentée (38b), ainsi que la première courroie dentée (42a), entre l'extrémité arrière du deuxième coulisseau (39b) et au moins ladite une roue dentée (38a).

6. Bras de robot selon la revendication 3, **caractérisé en ce que** les coulisseaux (39a, 39b) sont chacun munis de dentures au moyen desquelles s'engrène au moins ladite une roue dentée (38a ; 38b).

7. Bras de robot selon l'une des revendications 1 à 6, **caractérisé en ce que** la liaison par action coordonnée du boîtier de pince (17) avec la première tige (12) est créée par une couronne dentée reliée sans liberté de rotation avec le boîtier de pince et placée dans le même axe que l'axe de rotation (36).

8. Bras de robot selon l'une des revendications 1 à 7, **caractérisé en ce que** les tiges (12, 13) sont des tiges de roulement (12, 13) disposées dans un curseur (11) de façon à pouvoir se déplacer longitudinalement et **en ce que** l'organe de préhension (14) est accroché à celles-ci de façon inamovible.

9. Bras de robot selon la revendication 8, **caractérisé en ce que** le curseur (11) comprend un engrenage de translation afin de déplacer l'organe de préhension (14) dans la direction z, muni d'au moins une roue coulissante pouvant être entraînée (24a, 24b), au moyen de laquelle au moins une courroie (23a, 23b) va de l'organe de préhension (14) jusqu'aux extrémités, opposées à l'organe de préhension (14), des tiges de roulement (12, 13), où elle est fixée.

10. Bras de robot selon la revendication 9, **caractérisé en ce que** le curseur (11) est accroché de façon coulissante à au moins trois tiges porteuses (3,4,5) s'avançant, perpendiculairement à la direction z, dans une direction y, et placées de façon pivotante dans un support, et **en ce qu'**au moins ladite une roue coulissante (24a, 24b) est placée de façon coulissante, mais sans liberté de rotation sur une première tige porteuse (3) et que le curseur (11) comprend un premier engrenage angulaire qui transforme des rotations d'une deuxième tige porteuse (4) en rotations de la première tige de roulement (12), ainsi qu'un deuxième engrenage angulaire qui transforme des rotations d'une troisième tige porteuse (5) en rotations de la deuxième tige de roulement (13).

11. Bras de robot selon la revendication 10, **caractérisé en ce que** chaque engrenage angulaire comprend une première roue hélicoïdale (29 ; 43) placée sans liberté de rotation sur la tige porteuse correspondante (4; 5) et une deuxième roue hélicoïdale (31 ; 45) placée sans liberté de rotation sur la tige de roulement (12 ; 13) correspondante et qui s'engrène avec la première roue hélicoïdale (29 ; 43).

12. Bras de robot selon la revendication 10 ou 11, **caractérisé en ce que** le curseur (11) peut coulisser le long des tiges porteuses (3,4,5) à l'aide d'une courroie (19), qui lui est reliée, qui est entraînée en double dans la direction y et qu'il est possible d'actionner sur le support, la direction de ladite courroie changeant aux extrémités des tiges porteuses (3,4,5) opposées au support.

13. Bras de robot selon l'une des revendications 10 à 12, **caractérisé en ce que** le support est conçu comme un chariot (1) pouvant se déplacer le long d'un rail stabilisé (2) s'étendant dans une direction x, perpendiculairement à la direction y et perpendiculairement à la direction z.
